(19) Europäisches Patentamt / European Patent Office / Office européen des brevets

(11) **EP 3 744 782 B1**

(12) **EUROPEAN PATENT SPECIFICATION**

(45) Date of publication and mention
of the grant of the patent:
**24.07.2024 Bulletin 2024/30**

(21) Application number: **19741063.2**

(22) Date of filing: **16.01.2019**

(51) International Patent Classification (IPC):
*C08L 23/08* (2006.01)  *B32B 27/00* (2006.01)
*B32B 27/28* (2006.01)  *B32B 27/30* (2006.01)
*B65D 65/02* (2006.01)  *C08L 25/08* (2006.01)
*C08L 53/02* (2006.01)  *C09K 3/10* (2006.01)

(52) Cooperative Patent Classification (CPC):
(C-Sets available)
**C08L 53/025; B32B 7/12; B32B 15/082;
B32B 15/09; B32B 15/20; B32B 27/08;
B32B 27/281; B32B 27/302; B32B 27/304;
B32B 27/306; B32B 27/32; B32B 27/34;
B32B 27/36; C08L 23/0853; C09K 3/1006;** (Cont.)

(86) International application number:
**PCT/JP2019/001034**

(87) International publication number:
**WO 2019/142809 (25.07.2019 Gazette 2019/30)**

(54) **SEALABLE RESIN COMPOSITION, SEAL MATERIAL, PACKAGING MATERIAL, PACKAGING CONTAINER AND PACKAGE**

VERSIEGELBARE HARZZUSAMMENSETZUNG, SIEGELMATERIAL, VERPACKUNGSMATERIAL, VERPACKUNGSBEHÄLTER UND VERPACKUNG

COMPOSITION DE RÉSINE DOTÉE DE PROPRIÉTÉS D'ÉTANCHÉITÉ, MATÉRIAU D'ÉTANCHÉITÉ, MATÉRIAU D'EMBALLAGE, RÉCEPTACLE D'EMBALLAGE, ET CORPS D'EMBALLAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2018 JP 2018007916**

(43) Date of publication of application:
**02.12.2020 Bulletin 2020/49**

(73) Proprietor: **Dow-Mitsui Polychemicals Co., Ltd.
Tokyo 104-0028 (JP)**

(72) Inventors:
• **ISHIHARA, Takuya
Ichihara-shi, Chiba 299-0108 (JP)**
• **YAMAMOTO, Koichiro
Ichihara-shi, Chiba 299-0108 (JP)**

(74) Representative: **Gulde & Partner
Patent- und Rechtsanwaltskanzlei mbB
Wallstraße 58/59
10179 Berlin (DE)**

(56) References cited:
**CN-C- 100 425 649     JP-A- 2004 182 916
JP-A- 2007 070 482     JP-A- H0 496 959
JP-A- H0 496 959       JP-A- H0 718 238
JP-A- H03 181 031      US-A1- 2006 235 156
US-A1- 2008 038 549    US-A1- 2008 039 576**

EP 3 744 782 B1

(52) Cooperative Patent Classification (CPC): (Cont.)
B32B 2255/10; B32B 2255/205; B32B 2307/732;
B32B 2435/02; B32B 2439/40; B32B 2439/70;
B32B 2439/80; C09K 2200/062; C09K 2200/0622

C-Sets
**C08L 23/0853, C08L 53/025**

**Description**

TECHNICAL FIELD

The invention relates to a sealing resin composition, a sealing material, a packaging material, a packaging container, and a package.

BACKGROUND ART

A packaging container is widely used as a container of food or pharmaceutical products. In the related art, various materials are proposed and put to practical use as a sealing material for hermetically sealing the packaging container with a lid. For example, as such a sealing material, a resin composition containing ethylene-unsaturated ester copolymer and a tackifier resin is known.
Examples of a technique relating to the resin composition containing an ethylene-unsaturated ester copolymer and a tackifier resin include a technique disclosed in Patent Document 1 (JP 2017-186460 A).
Patent Document 1 discloses an adhesive for sealant including a composition that includes 78% to 94.8% by weight of ethylene-vinyl acetate copolymer (A) of which a vinyl acetate content measured by JIS K6924-1 is in a range of 3% to 18% by weight, and a melt mass flow rate measured by JIS K6924-1 is in a range of 5 to 40 g/10 minutes, 5% to 20% by weight of a tackifier (B) of which a softening point measured by a ring and ball method is 90°C to 140°C, and 0.2% to 2% by weight of an anti-static agent (C) including at least an organic boron compound (a sum of (A), (B), and (C) is 100% by weight).
Patent Document 2 relates to an adhesive resin composition and a laminate using the adhesive resin composition, and more particularly, to an adhesive such that the adhesive strength does not decrease even when it comes into contact with high-temperature water.

RELATED DOCUMENT

PATENT DOCUMENT

> [Patent Document 1] JP 2017-186460 A
> [Patent Document 2] JP H04 96959 A

SUMMARY OF THE INVENTION

TECHNICAL PROBLEM

A level of a technique required for a sealing material used in a lid of a container of food or pharmaceutical products and the like becomes increasingly high. The following problem was found relating to a resin composition for a lid including an ethylene-unsaturated ester copolymer and a tackifier resin as disclosed in JP 2017-186460 A.
According to the examination of the present inventors, it was apparent that a sealing material in the related art containing an ethylene-unsaturated ester copolymer and a tackifier resin is poor in low elution properties. For this reason, there was a concern that components constituting the sealing material may be eluted into the contents such as food and pharmaceutical products beyond a standard value.
In addition, it became apparent that it is possible to improve low elution properties of the sealing material by decreasing a content of the tackifier resin in the sealing material, whereas sealing properties in a state where a liquid is adhered onto the sealing material may deteriorate.
That is, the present inventors found that there is room for improvement in the sealing material of a lid material in the related art from a viewpoint of making the balance between sealing properties in the presence of a liquid and low elution properties favorable.
The present invention has been made in view of the above circumstances and provides a lid material comprising a sealing material being excellent in the balance between sealing properties in the presence of a liquid and low elution properties.

SOLUTION TO PROBLEM

The present inventors performed intensive examination to resolve the problem. As a result, the present inventors found that: (1) by combining an acid-modified styrene copolymer with an ethylene/unsaturated ester copolymer at a specific ratio so that an extraction amount into n-hexane is equal to or less than a specific amount, or (2) by combining the acid-modified styrene copolymer with the ethylene/unsaturated ester copolymer at a specific ratio and making a content of a tackifier resin equal to or less than a specific amount, a sealing material excellent in the balance between sealing properties in the presence of a liquid and low elution properties is obtained, thereby completing the invention of a lid material comprising a sealing resin composition.

That is, according to the present invention, there is provided a lid material comprising a sealing resin composition and a packaging container comprising a lid formed of the lid material.

According to the invention, there is provided a lid material comprising: a base layer, a seal layer formed of the sealing material formed of a sealing resin composition provided on one surface of the base layer, wherein the sealing resin composition includes an ethylene/unsaturated ester copolymer (A) and an acid-modified styrene copolymer (B), in which when a total content of the ethylene/unsaturated ester copolymer (A) and the acid-modified styrene copolymer (B) in the sealing resin composition is 100% by mass, a content of the ethylene/unsaturated ester copolymer (A) is equal to or more than 60% by mass and equal to or less than 99% by mass, a content of the acid-modified styrene copolymer (B) is equal to or more than 1% by mass and equal to or less than 40% by mass, wherein when the total of the sealing resin composition is 100% by mass, the total content of the ethylene/unsaturated ester copolymer (A) and the acid-modified styrene copolymer (B) is 60% by mass or more, a content of a tackifier resin in the sealing resin composition is less than 5% by mass when a total of the sealing resin composition is 100% by mass; and wherein. the tackifier resin (C) is at least one selected from the hydrogen additive of the alicyclic hydrocarbon resin and the hydrogen additive of the aromatic hydrocarbon resin.

According to a preferred embodiment, the lid material as described above is further specified in that the ethylene/unsaturated ester copolymer (A) includes at least one polymer selected from an ethylene/vinyl ester copolymer and an ethylene/unsaturated carboxylic acid ester copolymer.

According to a preferred embodiment, the lid material as described above is further specified in that the ethylene/unsaturated ester copolymer (A) includes an ethylene/vinyl acetate copolymer.

According to a preferred embodiment, the lid material as described above is further specified in that the acid-modified styrene copolymer (B) includes a styrene copolymer graft-modified with at least one compound selected from an unsaturated carboxylic acid and a derivative of the unsaturated carboxylic acid.

According to a preferred embodiment, the lid material as described above is further specified in that the unsaturated carboxylic acid includes at least one selected from a maleic acid and a maleic anhydride.

According to a preferred embodiment, the lid material as described above is further specified in that the styrene copolymer constituting the acid-modified styrene copolymer (B) includes one or two or more selected from a styrene-ethylene/butene block copolymer (SEB), a styrene-ethylene/butene-styrene block copolymer (SEBS), and a styrene-ethylene/propylene-styrene block copolymer (SEPS).

According to a further aspect, a packaging container including a container main body having an opening and a lid formed of the packaging material according to [16] which covers the opening of the container main body is described.

ADVANTAGEOUS EFFECTS OF INVENTION

According to the present invention, it is possible to provide a lid material comprising a sealing material which is excellent in the balance between sealing properties in the presence of a liquid and low elution properties.

DESCRIPTION OF EMBODIMENTS

Hereinafter, embodiments of the present invention will be described. "X to Y" in a numerical value range indicate equal to or more than X and equal to or less than Y unless otherwise noted. In addition, in the present embodiments, "(meth)acryl" means acryl, methacryl, or both of acryl and methacryl.

1. Sealing Resin Composition (P) and Sealing Material (H)

A sealing resin composition (P) according to the present embodiment includes an ethylene/unsaturated ester copolymer (A) and an acid-modified styrene copolymer (B), when a total content of the ethylene/unsaturated ester copolymer (A) and the acid-modified styrene copolymer (B) in the sealing resin composition (P) is 100% by mass, a content of the ethylene/unsaturated ester copolymer (A) is equal to or more than 60% by mass and equal to or less than 99% by mass, a content of the acid-modified styrene copolymer (B) is equal to or more than 1% by mass and equal to or less than 40% by mass, and an extraction amount into n-hexane measured by the following test method is 100 mg/L or less.

(Test method)

A test piece including a base layer and a seal layer provided on one surface of the base layer and formed of the sealing resin composition is prepared. Subsequently, the test piece is set on an exclusive tool for single surface elution such that the seal layer side is an upper side. Subsequently, the exclusive tool for single surface elution on which the test piece is set is immersed in n-hexane solvent of V [L] and left still at 25°C for 2 hours. Subsequently, n-hexane is distilled from the obtained n-hexane extraction solution. Subsequently, a mass M [mg] of an extraction residue obtained by distilling n-hexane is measured, and an extraction amount X (M/V) into n-hexane is calculated.

Here, as the base layer, those not being dissolved in n-hexane is used. As the base layer, a metal layer (aluminum foil and the like), a polyester film, a nylon film, a polyethylene film, a polypropylene film, a polyamide film, a polyimide film, a polyvinylidene chloride film, an aluminum vapor-deposited plastic film, a silica vapor-deposited plastic film, alumina vapor-deposited plastic film, an amorphous/polyethylene terephthalate film, and the like can be used, for example.

A thickness of the base layer is equal to or more than 1 um and equal to or less than 100 um, for example. A shape of the base layer is a shape such as sheet, film, and the like, for example.

In the sealing resin composition (P) according to the present embodiment, the extraction amount into n-hexane is 100 mg/L or less, but from a viewpoint of more favorable low elution properties, the extraction amount into n-hexane is preferably 50 mg/L or less, more preferably 30 mg/L or less, and particularly preferably 25 mg/L or less. The extraction amount into n-hexane can be adjusted in the range by adjusting the content of the ethylene/unsaturated ester copolymer (A) and the acid-modified styrene copolymer (B), for example.

A lower limit value of the extraction amount into n-hexane is preferably as low as possible, and thus is not particularly limited. The lower limit value is 1 mg/L or more, for example.

In addition, the sealing resin composition (P) according to the present embodiment may be in the following aspect.

The sealing resin composition (P) according to the present embodiment is a sealing resin composition including the ethylene/unsaturated ester copolymer (A) and the acid-modified styrene copolymer (B). When the total content of the ethylene/unsaturated ester copolymer (A) and the acid-modified styrene copolymer (B) in the sealing resin composition is 100% by mass, the content of the ethylene/unsaturated ester copolymer (A) is equal to or more than 60% by mass and equal to or less than 99% by mass, the content of the acid-modified styrene copolymer (B) is equal to or more than 1% by mass and equal to or less than 40% by mass, and the content of the tackifier resin in the sealing resin composition is less than 5% by mass when the total of the sealing resin composition is 100% by mass.

In addition, a sealing material (H) is formed of the sealing resin composition (P).

In the context of the invention, it became apparent that the sealing material in the related art containing an ethylene-unsaturated ester copolymer and a tackifier resin used for hermetically sealing a packaging container of food or pharmaceutical products with a lid is poor in low elution properties. For this reason, there was a concern that components constituting the sealing material may be eluted into the contents such as food and pharmaceutical products beyond a standard value.

Intensive examinations were performed in order to resolve the problem. As a result, it was found that it is possible to improve low elution properties of the sealing material by decreasing a content of the tackifier resin in the sealing material of a lid material, whereas sealing properties in a state where a liquid is adhered onto the sealing material may deteriorate.

That is, it was found that there is room for improvement in the sealing material in the related art from a viewpoint of making the balance between sealing properties in the presence of a liquid and low elution properties favorable.

Intensive examinations were performed to achieve the finding. As a result, it was found that: (1) by combining an acid-modified styrene copolymer with an ethylene/unsaturated ester copolymer at a specific ratio so that an extraction amount into n-hexane is equal to or less than a specific amount, or (2) by combining the acid-modified styrene copolymer with the ethylene/unsaturated ester copolymer at a specific ratio and making a content of a tackifier resin equal to or less than a specific amount, a sealing material (H) excellent in the balance between sealing properties in the presence of a liquid and low elution properties is obtained, thereby completing the invention.

That is, according to the sealing resin composition (P) and the sealing material (H) according to the present embodiment, as each of the content of the ethylene/unsaturated ester copolymer (A) and the content of the acid-modified styrene copolymer (B) is in the range, and the extraction amount into n-hexane is the upper limit value or less or the content of the tackifier resin is the upper limit value or less, it is possible to make the balance between sealing properties in the presence of a liquid and low elution properties favorable.

In addition, the sealing material (H) according to the present embodiment is formed of the sealing resin composition (P) according to the present embodiment. The sealing material (H) is excellent in sealing properties with respect to a packaging container, and thus can be appropriately used as a lid material constituting a lid of the packaging container.

In addition, the sealing material (H) according to the present embodiment is formed of the sealing resin composition (P), and thus is excellent in the balance between sealing properties in the presence of a liquid and low elution properties. For this reason, the sealing material (H) according to the present embodiment can be particularly appropriately used as a lid material constituting a lid of a package in which contents in a semi-solid form or liquid form are accommodated in a container main body of a packaging container.

In the sealing resin composition (P) according to the present embodiment, the content of the ethylene/unsaturated ester copolymer (A) is equal to or more than 60% by mass and equal to or less than 99% by mass when the total content of the ethylene/unsaturated ester copolymer (A) and the acid-modified styrene copolymer (B) in the sealing resin composition (P) is 100% by mass, but the content of the ethylene-unsaturated ester copolymer (A) is preferably 65% by mass or more, more preferably 68% by mass or more, and particularly preferably 70% by mass or more, and is preferably 98% by mass or less, more preferably less than 95% by mass, and particularly preferably 90% by mass or less.

When the content of the ethylene/unsaturated ester copolymer (A) is the lower limit value or more, it is possible to make sealing properties in the presence of a liquid and film-forming properties further favorable.

In the sealing resin composition (P) according to the present embodiment, the content of the acid-modified styrene copolymer (B) is 1% by mass or more and 40% by mass or less when the total content of the ethylene/unsaturated ester copolymer (A) and the acid-modified styrene copolymer (B) in the sealing resin composition (P) is 100% by mass, but the content of the acid-modified styrene copolymer (B) is preferably 2% by mass or more, more preferably more than 5% by mass, and particularly preferably 10% by mass or more, and preferably 35% by mass or less, more preferably 32% by mass or less, and particularly preferably 30% by mass or less.

When the content of the acid-modified styrene copolymer (B) is equal to or more than the lower limit value or more than the lower limit value, it is possible to make sealing properties of the obtained sealing material in the presence of a liquid further more favorable. In addition, when the content of the acid-modified styrene copolymer (B) is the upper limit value or less, it is possible to make film-forming properties further more favorable.

In the sealing resin composition (P) according to the present embodiment, when the total of the sealing resin composition (P) is 100% by mass, the total content of the ethylene/unsaturated ester copolymer (A) and the acid-modified styrene copolymer (B) is 60% by mass or more, more preferably 70% by mass or more, further more preferably 80% by mass or more, and particularly preferably 90% by mass or more. When the total content of the ethylene/unsaturated ester copolymer (A) and the acid-modified styrene copolymer (B) is in the range, it is possible to make the balance of sealing properties in the presence of a liquid, low elution properties, flexibility, mechanical characteristics, heat resistance, handleability, processability, and the like of the obtained sealing material further more favorable.

In the sealing resin composition (P) according to the present embodiment, from a viewpoint of improving processing reliability, a melt flow rate (MFR) of the sealing resin composition (P) measured in a condition of a load of 2160 g at 190°C based on JIS K7210:1999 is preferably 0.01 g/10 minutes or more and 150 g/10 minutes or less, and more preferably 0.1 g/10 minutes or more and 100 g/10 minutes or less, and further more preferably 0.5 g/10 minutes or more and 50 g/10 minutes or less.

Hereinafter, each component constituting the sealing resin composition (P) according to the present embodiment will be described.

<Ethylene-unsaturated Ester Copolymer (A)>

The ethylene-unsaturated ester copolymer (A) according to the present embodiment is a polymer obtained by copolymerizing ethylene and at least one of unsaturated ester. As the ethylene/unsaturated ester copolymer (A), a copolymer including ethylene and unsaturated ester can be exemplified.

In addition, the ethylene/unsaturated ester copolymer (A) according to the present embodiment preferably includes at least one polymer selected from an ethylene/vinyl ester copolymer and an ethylene/unsaturated carboxylic acid ester copolymer.

In addition, the ethylene/unsaturated ester copolymer (A) according to the present embodiment may include a polymerizable monomer other than ethylene and unsaturated ester, and olefins such as propylene, butene, and hexane can be exemplified, for example.

As the ethylene/vinyl ester copolymer according to the present embodiment, one or two or more selected from an ethylene/vinyl acetate copolymer, an ethylene/vinyl propionate copolymer, an ethylene/vinyl butyrate copolymer, and an ethylene/vinyl stearate copolymer can be used, for example.

The ethylene/unsaturated carboxylic acid ester copolymer according to the present embodiment is a polymer obtained by copolymerizing ethylene and at least one of unsaturated carboxylic acid ester.

Specifically, a copolymer formed of ethylene and unsaturated carboxylic acid alkyl ester can be exemplified.

Examples of an unsaturated carboxylic acid in unsaturated carboxylic acid ester include acrylic acid, methacrylic acid, 2-ethylacrylic acid, crotonic acid, maleic acid, fumaric acid, itaconic acid, maleic anhydride, fumaric anhydride, itaconic anhydride, monomethyl maleate, monoethyl maleate, and the like.

Among these, the unsaturated carboxylic acid preferably includes at least one selected from acrylic acid and methacrylic acid from a viewpoint of productivity, hygienic properties, and the like of the ethylene/unsaturated ester copolymer (A). One of these unsaturated carboxylic acids may be used alone, or two or more thereof may be used in combination.

As an alkyl site in unsaturated carboxylic acid alkyl ester, those having 1 to 12 carbon atoms can be exemplified, and further specifically, an alkyl group such as methyl, ethyl, n-propyl, isopropyl, n-butyl, isobutyl, secondary butyl, 2-ethylhexyl, and isooctyl can be exemplified. In the present embodiment, the number of carbon atoms of the alkyl site of alkyl ester is preferably 1 to 8.

As the unsaturated carboxylic acid ester, one or two or more selected from (meth)acrylic acid ester such as methyl(meth)acrylate, ethyl(meth)acrylate, isopropyl(meth)acrylate, n-propyl(meth)acrylate, isobutyl(meth)acrylate, n-butyl(meth)acrylate, isooctyl(meth)acrylate, and 2-ethylhexyl(meth)acrylate. One of these unsaturated carboxylic acid esters may be used alone, or two or more thereof may be used in combination. Among these, one or two or more selected from methyl(meth)acrylate, ethyl(meth)acrylate, isopropyl(meth)acrylate, n-propyl(meth)acrylate, isobutyl(meth)acrylate, and n-butyl(meth)acrylate are more preferable.

In the present embodiment, a preferable ethylene/unsaturated carboxylic acid ester copolymer is an ethylene/(meth)acrylic acid ester copolymer. Among these, a copolymer formed of one compound as (meth)acrylic acid ester is preferable. As such a copolymer, an ethylene/methyl(meth)acrylate copolymer, an ethylene/ethyl(meth)acrylate copolymer, an ethylene/isopropyl(meth)acrylate copolymer, an ethylene/n-propyl(meth)acrylate copolymer, an ethylene/isobutyl(meth)acrylate copolymer, an ethylene/n-butyl(meth)acrylate copolymer, an ethylene/isooctyl(meth)acrylate copolymer, an ethylene/2-ethylhexyl(meth)acrylate copolymer, and the like are exemplified.

As the ethylene/unsaturated ester copolymer (A), one or two or more selected from an ethylene/vinyl acetate copolymer, an ethylene/methyl(meth)acrylate copolymer, an ethylene/ethyl(meth)acrylate copolymer, an ethylene/isopropyl(meth)acrylate copolymer, an ethylene/n-propyl(meth)acrylate copolymer, an ethylene/isobutyl(meth)acrylate copolymer, and an ethylene/n-butyl(meth)acrylate copolymer are preferable, and an ethylene/vinyl acetate copolymer is more preferable.

The ethylene/unsaturated ester copolymer (A) according to the present embodiment may be used alone, or two or more thereof may be used in combination.

In the present embodiment, from a viewpoint of improving processing reliability, a melt flow rate (MFR) of the ethylene/unsaturated ester copolymer (A) measured in a condition of a load of 2160 g at 190°C based on JIS K7210:1999 is preferably 0.01 g/10 minutes or more and 150 g/10 minutes or less, more preferably 0.1 g/10 minutes or more and 100 g/10 minutes or less, and further more preferably 0.5 g/10 minutes or more and 50 g/10 minutes or less.

The MFR of the ethylene/unsaturated ester copolymer (A) may be adjusted by blending a plurality of ethylene/unsaturated ester copolymers (A) having different MFRs .

In the ethylene/unsaturated ester copolymer (A) according to the present embodiment, when the total of a constituent unit of the ethylene/unsaturated ester copolymer is 100% by mass, a content of a constituent unit obtained from ethylene is preferably 70% by mass or more and 95% by mass or less, more preferably 72% by mass or more and 93% by mass or less, and particularly preferably 75% by mass or more and 92% by mass or less.

When the content of the constituent unit obtained from ethylene is the lower limit value or more, it is possible to make heat resistance, mechanical intensity, water resistance, processability, and the like of the obtained sealing material further favorable. In addition, when the content of the constituent unit obtained from ethylene is the upper limit value or less, it is possible to make transparency, flexibility, adhesiveness, and the like of the obtained sealing material further favorable.

In the ethylene/unsaturated ester copolymer (A) according to the present embodiment, when the total of the constituent unit of the ethylene/unsaturated ester copolymer is 100% by mass, a content of a constituent unit obtained from unsaturated ester is preferably 5% by mass or more and 30% by mass or less, more preferably 7% by mass or more and 28% by mass or less, and particularly preferably 8% by mass or more and 25% by mass or less.

When the content of the constituent unit obtained from unsaturated ester is the lower limit value or more, it is possible to make transparency, flexibility, adhesiveness, and the like of the obtained sealing material further favorable. In addition, when the content of the constituent unit obtained from unsaturated ester is the upper limit value or less, it is possible to make heat resistance, mechanical intensity, water resistance, processability, and the like of the obtained sealing material further favorable.

A method of producing the ethylene/unsaturated ester copolymer (A) according to the present embodiment is not particularly limited, and production can be performed by a known method. For example, it can be obtained by performing radical copolymerization of each polymerization component under a high temperature and a high pressure. In addition, as the ethylene/unsaturated ester copolymer (A), a commercially available one may be used.

<Acid-modified Styrene Copolymer (B)>

As the acid-modified styrene copolymer (B) according to the present embodiment, an acid-modified styrene block copolymer is preferable, and a polymer obtained by acid-modifying a styrene block copolymer having at least a styrene block which is a hard segment and a rubber block which is a soft segment is more preferable. As the acid-modified styrene copolymer (B), a styrene copolymer obtained by graft-modified with at least one compound selected from an unsaturated carboxylic acid and a derivative of the unsaturated carboxylic acid can be exemplified.

Examples of the unsaturated carboxylic acid in the acid-modified styrene copolymer (B) include acrylic acid, methacrylic acid, 2-ethylacrylic acid, crotonic acid, maleic acid, fumaric acid, and itaconic acid. Among these, the unsaturated carboxylic acid preferably includes at least one selected from acrylic acid, methacrylic acid, maleic acid, fumaric acid, and itaconic acid, and more preferably includes maleic acid, from a viewpoint of productivity, hygienic properties, and the like of the acid-modified styrene copolymer (B).

Examples of the derivative of the unsaturated carboxylic acid in the acid-modified styrene copolymer (B) include anhydride such as maleic anhydride, phthalic anhydride, and itaconic anhydride, acid ester such as monomethyl maleate and monoethyl maleate, acid amide, acid halide, and the like. Among these, the derivative of the unsaturated carboxylic acid preferably includes maleic anhydride. These unsaturated carboxylic acids and the derivatives of these unsaturated carboxylic acids may be used alone, or two or more thereof may be used in combination.

The styrene copolymer constituting the acid-modified styrene copolymer (B) is preferably a block copolymer having a styrene block which is a hard segment and a rubber block which is a soft segment, and the rubber block which is a soft segment is preferably positioned in the middle of the styrene block which is a hard segment. In such a polymer having a styrene block and a rubber block, a styrene block part forms a physical cross-linking (domain) and serves as a cross-linking point, and the rubber block imparts rubber elasticity to the polymer.

Examples of the rubber block which is a soft segment include polybutadiene (B), polyisoprene (I), polyolefin elastomer (ethylene/propylene (EP)), and the like.

In accordance with the form of arrangement with polystyrene (S) which is a hard segment, the type is divided into linear (linear type) and radical (radical type).

As the styrene copolymer constituting the acid-modified styrene copolymer (B), a styrene block copolymer is preferable, and examples thereof include a styrene-butadiene block copolymer (SB), a styrene-butadiene-styrene block copolymer (SBS), a styrene-isoprene block copolymer (SI), a styrene-isoprene-styrene block copolymer (SIS), or a hydrogen additive of these block copolymers.

The hydrogen additive may be a block copolymer in which all of a styrene block and a diene block are hydrogen-added, or may be a partial hydrogen additive such as a block copolymer in which only a diene block is hydrogen-added or a block copolymer in which some of the styrene block and the diene block is hydrogen-added.

One of these styrene copolymers may be used alone, or two or more thereof may be used in combination.

Among these block copolymers, a hydrogen additive of a block copolymer containing a styrene block and a diene block such as hydrogen additive of a styrene-butadiene block copolymer (SB), hydrogen additive of a styrene-butadiene-styrene block copolymer (SBS), hydrogen additive of a styrene-isobutylene-styrene block copolymer (SIS), and hydrogen additive of a styrene-isobutylene block copolymer (SI) is more preferable, and specifically, a styrene-ethylene/butene block copolymer (SEB) which is a hydrogen additive of a styrene-butadiene block copolymer (SB), a styrene-ethylene/butene-styrene block copolymer (SEBS) which is a hydrogen additive of a styrene-butadiene-styrene block copolymer (SBS), and a styrene-ethylene/propylene-styrene block copolymer (SEPS) which is a hydrogen additive of a styrene-isoprene-styrene block copolymer (SIS) are preferable from a viewpoint of having excellent heat reliability during extrusion forming, having reliability during processing, suppressing occurrence of a deteriorated product and occurrence of foul smell.

As the acid-modified styrene copolymer (B) according to the present embodiment, a polymer obtained by grafting at least one compound selected from an unsaturated carboxylic acid and a derivative of the unsaturated carboxylic acid in a styrene copolymer in a molten state in the presence of a radical initiator can be used. As the radical initiator, those generally used in graft reaction of polyolefin may be used.

In the present embodiment, from a viewpoint of further improving processing reliability, the melt flow rate (MFR) of the acid-modified styrene copolymer (B) measured in a condition of a load of 2160 g at 190°C based on JIS K7210: 1999 is preferably equal to or more than 0.01 g/10 minutes and equal to or less than 150 g/10 minutes, more preferably equal to or more than 0.1 g/10 minutes and equal to or less than 100 g/10 minutes, and further more preferably equal to or more than 0.5 g/10 minutes and equal to or less than 50 g/10 minutes.

The MFR of the acid-modified styrene copolymer (B) may be adjusted by blending a plurality of the acid-modified styrene copolymers (B) having different MFRs.

As a commercially available product of the acid-modified styrene copolymer (B), Kraton (registered trademark) manufactured by Kraton Polymers Ltd. and Tuftec (registered trademark) manufactured by Asahi Kasei Chemicals, and the like are exemplified.

<Tackifier Resin (C)>

In addition, a tackifier resin (C) may be contained in the sealing resin composition (P) according to the present embodiment, and a content of the tackifier resin (C) is preferably less than 5% by mass, more preferably less than 3% by mass, further preferably 1% by mass, further more preferably less than 0.5% by mass, and even further more preferably less than 0.1% by mass, when the total of the sealing resin composition (P) is 100% by mass. In addition, the sealing resin composition (P) according to the present embodiment further more preferably substantially does not contain the tackifier resin (C) and particularly preferably does not contain the tackifier resin (C). By setting the content of the tackifier resin (C) to be less than the upper limit value, it is possible to decrease an extraction amount of the sealing resin composition (P) and the sealing material (H) into n-hexane, and as a result, it is possible to make low elution properties of the sealing resin composition (P) and the sealing material (H) further favorable.

"Substantially does not contain the tackifier resin (C)" means that the tackifier resin (C) may be contained in a range in which the effect of the present invention is not impaired.

Examples of the tackifier resin (C) include a hydrogen additive of a petroleum resin such as aliphatic hydrocarbon resin, aromatic hydrocarbon resin, aliphatic-aromatic copolymer hydrocarbon resin, alicyclic hydrocarbon resin, and the like; a hydrogen additive of a terpene resin such as pinene resin, coumarone indene resin, terpene phenol resin, and the like; a hydrogen additive of a polymerizable rosin resin; a hydrogen additive of an (alkyl)phenol resin; a hydrogen additive of a xylene resin; a hydrogen additive of a styrene resin, and the like. Among these, the hydrogen additive of the petroleum resin is preferable, and at least one selected from the hydrogen additive of the alicyclic hydrocarbon resin and the hydrogen additive of the aromatic hydrocarbon resin is particularly preferable. These tackifier resins (C) may contain an olefin resin.

Examples of the hydrogen additive of the petroleum resin include a hydrogen additive of a resin having a vinyl aromatic hydrocarbon of $C_8$ to $C_{10}$ such as vinyl toluene, indene, and $\alpha$-methyl styrene as a main component.

Examples of the hydrogen additive of the terpene resin include a hydrogen additive of $\alpha$-pinene polymer, $\beta$-pinene polymer, dipentene polymer, and terpene/phenol copolymer.

Examples of the hydrogen additive of the polymerizable rosin resin include a hydrogenated rosin, glycerin ester of the hydrogenated rosin or a polymer thereof, and pentaerythritol ester of the hydrogenated rosin or a polymer thereof.

Examples of the hydrogen additive of the styrene resin include a hydrogen additive of a single polymer of a styrene monomer, a styrene/olefin copolymer, a vinyl toluene/$\alpha$-methyl styrene copolymer, and the like.

<Other Components>

The sealing resin composition (P) according to the present embodiment may contain components other than the ethylene/unsaturated ester copolymer (A) and the acid-modified styrene copolymer (B) within a range not impairing the effect of the present invention. The other components are not particularly limited, but examples thereof include a plasticizer, an anti-oxidant, an ultraviolet absorbing agent, an anti-static agent, a surfactant, a coloring agent, a photostabilizer, a foaming agent, a lubricant, a crystal nucleating agent, a crystallization promoter, a crystallization retardant, a catalytic deactivator, a thermoplastic resin, a thermosetting resin, an inorganic filler, an organic filler, an impact modifier, a slipping agent, a cross-linking agent, a cross-linking aid, a silane-coupling agent, a processing aid, a mold release agent, a hydrolysis inhibitor, a heat-resistant stabilizer, an anti-blocking agent, an anti-fogging agent, a flame retardant, a flame retardant aid, a light diffusion agent, an anti-bacterial agent, an anti-fungal agent, a dispersant, and other resins. These other components may be used alone, or two or more thereof may be used in combination.

<Method of Producing Sealing Resin Composition (P)>

A method of producing the sealing resin composition (P) according to the present embodiment is not particularly limited. For example, (a method of preparation by mixing the ethylene/unsaturated ester copolymer (A), the acid-modified styrene copolymer (B), and other components added depending on the necessity by dry blending); a method of preparation by melting and kneading the ethylene/unsaturated ester copolymer (A), the acid-modified styrene copolymer (B), and other components added depending on the necessity using a extruder and the like; and the like can be employed.

A method of producing the sealing material (H) according to the present embodiment is not particularly limited, and a known method in the related art can be used. For example, a press molding method, an extrusion molding method, an injection molding method, a compression molding method, a cast molding method, a calender molding method, an inflation molding method, and the like can be used.

A shape of the sealing material (H) according to the present embodiment is not particularly limited, but a film or sheet is preferable.

2. Packaging Material

A packaging material according to the present embodiment includes a base layer and a seal layer provided on one surface of the base layer and formed of the sealing material (H) according to the present embodiment.

The packaging material according to the present embodiment includes a seal layer formed of the sealing material (H) according to the present embodiment, and thus is excellent in sealing properties with respect to a container. For this reason, the packaging material can be particularly appropriately used as a lid material constituting a lid of a container.

In addition, the packaging material according to the present embodiment includes a seal layer formed of the sealing material (H) according to the present embodiment, and thus is excellent in the balance between sealing properties in the presence of a liquid and low elution properties. For this reason, the packaging material according to the present embodiment can be particularly appropriately used as a lid material constituting a lid of a package in which contents in a semi-solid form or liquid form are accommodated in a container main body of a packaging container.

In the packaging material according to the present embodiment, a thickness of the seal layer formed of the sealing material (H) according to the present embodiment is equal to or more than 1 um and equal to or less than 200 $\mu$m, and preferably equal to or more than 10 um and equal to or less than 100 $\mu$m, for example.

The base layer is a layer provided for the purpose of making properties of the packaging material such as handleability, mechanical properties, conductivity, heat insulating properties, heat resistance, and moisture-proofness more favorable. As the base layer, a metal layer (aluminum foil and the like), a polyester film, a nylon film, a polyethylene film, a polypropylene film, a polyamide film, a polyimide film, a polyvinylidene chloride film, an aluminum vapor-deposited plastic film, a silica vapor-deposited plastic film, alumina vapor-deposited plastic film, an amorphous/polyethylene terephthalate film, and the like can be used, for example. These can be used alone, or two or more thereof can be used in combination. These may be uniaxially or biaxially extended.

In order to modify adhesiveness of the base layer with the seal layer, surface treatment may be performed on the base layer. Specifically, corona treatment, plasma treatment, undercoat treatment, primer coat treatment, and the like may be performed.

A thickness of the base layer is preferably equal to or more than 1 um and equal to or less than 100 $\mu$m, more preferably equal to or more than 2 um and equal to or less than 50 $\mu$m, and further more preferably equal to or more than 5 um and equal to or less than 40 um.

A shape of the base layer is not particularly limited, and examples of the shape include a shape such as sheet, film, and the like.

The packaging material according to the present embodiment may be formed of only the base layer and the seal layer, and from a viewpoint of imparting various functions to the packaging material, the packaging material may have a layer other than the base layer and the seal layer (hereinafter, referred to as other layer). Examples of the other layer include a foaming layer, a metal layer, an inorganic matter layer, a gas barrier resin layer, an anti-static layer, a hard coat layer, an adhesion layer, an anti-reflection layer, an anti-fouling layer, and the like. One of these other layers may be used alone, or two or more thereof may be used in combination.

Here, the adhesion layer is a layer provided in order to enhance adhesiveness between each layer.

The packaging material according to the present embodiment may be uniaxially or biaxially extended at an optional rate, depending on the necessity.

By molding the sealing resin composition (P) according to the present embodiment using a molding method such as extrusion molding, injection molding, blow molding, film or sheet molding, and the like, it is possible to make the packaging material according to the present embodiment into various shapes.

The shape of the packaging material according to the present embodiment is not particularly limited, and the shape is preferably a film or sheet.

The packaging material according to the present embodiment can be appropriately used as a packaging material used for packing food, pharmaceutical products, industrial goods, daily necessities, cosmetics, and the like, and can be particularly appropriately used as a packaging material of food and pharmaceutical products.

3. Packaging Container

A packaging container according to the present embodiment includes a container main body having an opening and a lid formed of the packaging material according to the present embodiment which covers the opening of the container main body, for example.

In addition, the container main body having an opening is not particularly limited, and examples thereof include a container formed of a resin such as polyethylene, polypropylene, polyester, polycarbonate, and polyvinyl chloride.

The packaging container according to the present embodiment can be appropriately used as a packaging container used for packaging food, pharmaceutical products, industrial goods, daily necessities, and cosmetics, and can be particularly appropriately used as a packaging container of food and pharmaceutical products.

4. Package

A package according to the present embodiment includes a packaging container according to the present embodiment and a content accommodated in the container main body, for example.

In addition, the content accommodated in the container main body is not particularly limited, and examples thereof include food, pharmaceutical products, industrial goods, daily necessities, cosmetics, and the like.

In addition, the packaging container according to the present embodiment includes a lid formed of a packaging material according to the embodiment, and thus is excellent in the balance between sealing properties in the presence of a liquid and low elution properties. For this reason, as the content accommodated in the container main body of the packaging container, those in a semi-solid form or liquid form can be appropriately used. In addition, the packaging container according to the present embodiment is excellent in low elution properties. Therefore, as the content accommodated in the container main body, food or pharmaceutical products for which a high level of low elution properties is required is preferable.

[EXAMPLES]

Hereinafter, examples of the present invention will be specifically described, and the present invention is not limited to the examples.

The details of the components used in preparation of the sealing resin composition (P) are as follows.

<Ethylene/Unsaturated Ester Copolymer (A)>

EVA1: Ethylene/vinyl acetate copolymer (MFR = 15 g/10 min, ethylene content (content of a constituent unit obtained from ethylene) = 81% by mass, vinyl acetate content (content of a constituent unit obtained from vinyl acetate) = 19% by mass)

EMA1: Ethylene/methyl acrylate copolymer (MFR = 8 g/10 min, ethylene content (content of a constituent unit obtained from ethylene) = 80% by mass, methyl acrylate content (content of a constituent unit obtained from methyl acrylate) = 20% by mass)

<Acid-modified Styrene Copolymer (B)>

Acid-modified SEBS1: Maleic anhydride-modified styrene-ethylene/butene-styrene block copolymer (manufactured by Kraton Polymers Ltd., Kraton FG1901)

<Tackifier Resin (C)>

Tackifier resin 1: Hydrogen additive of alicyclic hydrocarbon resin (Arakawa Chemical Industries, Ltd., Arkon AM-1)

<Other Ethylene Copolymers>

Ethylene copolymer 1: Ethylene/$\alpha$-olefin copolymer (manufactured by Mitsui Chemicals, TAFMER A4085S)
Ethylene copolymer 2: Ethylene/$\alpha$-olefin copolymer (manufactured by Mitsui Chemicals, TAFMER A20085S)

<Other Styrene Copolymer>

SEPS1: Styrene-ethylene/propylene-styrene copolymer (manufactured by Kuraray, SEPTON S2002)

<Other Components>

PEG: Polyethylene glycol (manufactured by Nippon Fine Chemical Co., Ltd)
ELA: Erucic acid amide (manufactured by NOF Corporation)

[Examples 1 to 7, Comparative Examples 1 to 7]

Each component was melted and kneaded at a mixture ratio shown in Tables 1 and 2 at 160°C using an extruder (advanced Dulmage flight screw) to obtain a sealing resin composition (P).

Subsequently, the obtained sealing resin composition (P) was subjected to extrusion laminate processing in the following condition to prepare a packaging material.

Using a single extrusion laminator, in an extrusion condition in which an extruder die outlet resin temperature is 240°C, a take-over speed is 30 m/minute, and a thickness of a seal layer formed of the sealing resin composition (P) after molding was 20 µm, the obtained sealing resin composition (P) was melt and extruded from a T-die onto a PE layer of a base layer (double-layered laminate of AL layer (20 um)/PE layer (15 um)) to mold a film-like laminate.

The following evaluation was performed on the obtained packaging material. The result is shown in Table 1.

[High-Frequency Seal Strength in Presence of Liquid]

The packaging material obtained in examples and comparative examples was laminated on a HIPS (High Impact polystyrene) sheet on which a commercially available lactic acid bacteria beverage was applied such that a seal layer side came into contact with the HIPS sheet (NOASTIC-M manufactured by RP Topla Group) of a thickness of 0.5 mm, and a A-PET sheet (NOACRYSTAL-V manufactured by RP Topla Group) of a thickness of 0.3 mm was placed on a AL layer of the packaging material. The obtained laminate was subjected to sealing at 50% or 52% output, 0.1 MPa (gauge pressure) for 2 seconds of a pressurization time, for 0.5 seconds of welding, and for 2 seconds of cooling using a high-frequency welder (maximum output = 3 kW, oscillation frequency = 40.46 MHz), and the packaging material was adhered on the HIPS sheet, and left still at room temperature (23°C) for 24 hours (the A-PET sheet used at the time of sealing was removed immediately after the sealing).

Subsequently, in an environment of 23°C, the packaging material (test piece of a width of 15 mm) was removed from the HIPS sheet at a tension rate of 300 mm/minute, and a maximum stress was calculated as a seal strength (N/15 mm) with respect to the HIPS sheet.

[High-Frequency Sealing Properties in Presence of Liquid]

Subsequently, high-frequency sealing properties in the presence of a liquid of the packaging material obtained in examples and comparative examples were evaluated based on the following criteria.

> A: Seal strength is equal to or more than 6 N/15 mm
> B: Seal strength is equal to or more than 5 N/15 mm and less than 6 N/15 mm
> C: Seal strength is less than 5 N/15 mm

[Extraction Amount into n-hexane]

From the packaging material obtained in examples and comparative examples, three test pieces of 15 cm × 15 cm were cut out so that a circle of 100 $cm^2$ could be ensured. Subsequently, having a subject area of the test pieces (total of three pieces) as 300 $cm^2$, each of the test pieces was set on an exclusive tool for single surface elution of a circular inner diameter of 11.3 cm such that the seal layer side is an upper side (three of 100 $cm^2$/1 piece). As the exclusive tool for single surface elution, the tool shown in a drawing on page 34 of Document "Specification standards for Tools and Container Packaging and the Test methods" (written by Kawamura Yoko, supervised by Standards and Evaluation Division, Department of Food Safety, Pharmaceutical and Food Safety Bureau, Ministry of Health Labour and Welfare) was used. Subsequently, each of the exclusive tool for single surface elution on which the test piece was set was placed in each of three measuring cylinders having a capacity of 300 mL, 200mL of a n-hexane solvent of 25°C was poured therein and left still at 25°C for 2 hours. After an elapse of 2 hours, the obtained n-hexane extraction solution (total of 600 mL) was recovered in a beaker of 1 L, and the n-hexane extraction solution was transferred to a 150 mL of Soxhlet flask of which constant weight was obtained (the constant weight indicates that when repeating a step of drying an empty flask at 105°C for 2 hours, cooling thereof for 30 minutes, and measuring the weight, the weight change of the empty flask becomes 0.5 mg or less). After that, the solvent was distilled (a total of 600 mL of hexane was distilled off several times) using a rotary evaporator.

Subsequently, after drying at 105°C for 2 hours, it was cooled in a desiccator for 30 minutes. Subsequently, a weight $m_2$ of the Soxhlet flask including an extraction residue was measured.

In addition, as a blank, a weight $m_1$ of the empty Soxhlet flask was measured. Here, the weight $m_1$ of the empty Soxhlet flask was measured by the same operation as the measurement of the weight $m_2$ except that 600 mL of n-hexane was used instead of a 600 mL of n-hexane extraction solution. An extraction amount X [mg/L] into n-hexane was calculated from the following Equation (1).

$$X = \{(m_2 - m_1) \times 1000\}/600$$

X: Extraction amount into hexane [mg/L]
mi: Weight of empty Soxhlet flask [mg]
$m_2$: Weight of Soxhlet flask including an extraction residue [mg]

[Low Elution Properties]

Subsequently, low elution properties of the packaging material obtained in examples and comparative examples were evaluated based on the following criteria.

A: An extraction amount into n-hexane is equal to or less than 25 mg/L
B: An extraction amount into n-hexane is equal to or more than 25 mg/L and equal to or less than 100 mg/L
C: An extraction amount into n-hexane is more than 100 mg/L

[Table 1]

| | | Example 1 | Example 2 | Example 3 | Example 4 | Example 5 | Example 6 | Example 7 |
|---|---|---|---|---|---|---|---|---|
| Ethylene/ unsaturated ester copolymer (A) | EVA1 [parts by mass] | 64.85 | 59.85 | 54.85 | 90 | 85 | 80 | 70 |
| | EMA1 [parts by mass] | 30 | 30 | 30 | | | | |
| Acid-modified styrene copolymer (B) | Acid-modified SEBS1 [parts by mass] | 5 | 10 | 15 | 10 | 15 | 20 | 30 |
| other components | PEG [parts by mass] | 0.06 | 0.06 | 0.06 | | | | |
| | ELA [parts by mass] | 0.09 | 0.09 | 0.09 | | | | |
| Evaluation | | | | | | | | |
| Sealing properties in presence of liquid | Output: 50% | A | A | A | B | A | A | A |
| | Output: 52% | A | A | A | A | A | A | A |
| Low elution properties | | A | A | A | A | A | A | A |

[Table 2]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Ethylene/ unsaturated ester copolymer (A) | EVA1 [parts by mass] | 85 | 69.85 | 49.85 | 59.85 | 49.85 | 59.85 | 100 |
| | EMA1 [parts by mass] | | 30 | 30 | 30 | 30 | 30 | |
| Tackifier resin (C) | Tackifier resin 1 [parts by mass] | 15 | | | | | | |
| Other ethylene polymer | Ethylene polymer 1 [parts by mass] | | | 20 | | | | |
| | Ethylene polymer 2 [parts by mass] | | | | 10 | 20 | | |
| Other styrene copolymer | SEPS 1 [parts by mass] | | | | | | 10 | |
| Other components | PEG [parts by mass] | | 0.06 | 0.06 | 0.06 | 0.06 | 0.06 | |
| | ELA [parts by mass] | | 0.09 | 0.09 | 0.09 | 0.09 | 0.09 | |
| Evaluation | | | | | | | | |
| Sealing properties in presence of liquid | Output: 50% | A | C | C | C | C | C | C |
| | Output: 52% | A | B | B | C | C | C | C |
| Low elution properties | | C | - | - | - | - | - | - |

The packaging material of Examples 1 to 7 was excellent in the balance between sealing properties in the presence of a liquid and low elution properties. With respect to this, the packaging material of Comparative Examples 1 to 7 was poor in the balance between sealing properties in the presence of a liquid and low elution properties.

**Claims**

1.   A lid material comprising:

a base layer,
a seal layer formed of the sealing material formed of a sealing resin composition provided on one surface of the base layer,
wherein the sealing resin composition comprising:

an ethylene/unsaturated ester copolymer (A); and
an acid-modified styrene copolymer (B),
wherein when a total content of the ethylene/unsaturated ester copolymer (A) and the acid-modified styrene copolymer (B) in the sealing resin composition is 100% by mass,
a content of the ethylene/unsaturated ester copolymer (A) is equal to or more than 60% by mass and equal to or less than 99% by mass,
a content of the acid-modified styrene copolymer (B) is equal to or more than 1% by mass and equal to or less than 40% by mass,
wherein when the total of the sealing resin composition is 100% by mass, the total content of the ethylene/unsaturated ester copolymer (A) and the acid-modified styrene copolymer (B) is 60% by mass or more,
a content of a tackifier resin (C) in the sealing resin composition is less than 3% by mass when a total of the sealing resin composition is 100% by mass; and wherein
the tackifier resin (C) is at least one selected from the hydrogen additive of the alicyclic hydrocarbon resin and the hydrogen additive of the aromatic hydrocarbon resin.

2.   The lid material according to Claim 1,
wherein the ethylene/unsaturated ester copolymer (A) includes at least one polymer selected from an ethylene/vinyl ester copolymer and an ethylene/unsaturated carboxylic acid ester copolymer.

3.   The lid material according to Claim 1 or 2,
wherein the acid-modified styrene copolymer (B) includes a styrene copolymer graft-modified with at least one compound selected from an unsaturated carboxylic acid and a derivative of the unsaturated carboxylic acid.

4.   The lid material according to Claim 3,
wherein the styrene copolymer constituting the acid-modified styrene copolymer (B) includes one or two or more selected from a styrene-ethylene/butene block copolymer (SEB), a styrene-ethylene/butene-styrene block copolymer (SEBS), and a styrene-ethylene/propylene-styrene block copolymer (SEPS).

5.   A packaging container comprising:

a container main body having an opening; and
a lid formed of the packaging material according to Claims 1 to 4 which covers the opening of the container main body.

**Patentansprüche**

1.   Deckelmaterial, umfassend:

eine Basisschicht,
eine Siegelschicht, die aus dem aus einer Versiegelungsharzzusammensetzung ausgebildeten Versiegelungsmaterial ausgebildet ist und auf einer Oberfläche der Basisschicht bereitgestellt ist, wobei die Versiegelungsharzzusammensetzung Folgendes umfasst:

ein Ethylen/ungesättigter-Ester-Copolymer (A); und

ein säuremodifiziertes Styrol-Copolymer (B), wobei, wenn ein Gesamtgehalt des Ethylen/ungesättigter-Ester-Copolymers (A) und des säuremodifizierten Styrol-Copolymers (B) in der Versiegelungsharzzusammensetzung 100 Massen-% beträgt,

ein Gehalt des Ethylen/ungesättigter-Ester-Copolymers (A) größer oder gleich 60 Massen-% und kleiner oder gleich 99 Massen-% ist,

ein Gehalt des säuremodifizierten Styrol-Copolymers (B) größer oder gleich 1 Massen-% und kleiner oder gleich 40 Massen-% ist,

wobei, wenn die Gesamtheit der

Versiegelungsharzzusammensetzung 100 Massen-% beträgt, der Gesamtgehalt des Ethylen/ungesättigter-Ester-Copolymers (A) und des säuremodifizierten Styrol-Copolymers (B) 60 Massen-% oder mehr beträgt,

ein Gehalt eines Klebrigmacherharzes (C) in der Versiegelungsharzzusammensetzung kleiner als 3 Massen-% ist, wenn eine Gesamtheit der Versiegelungsharzzusammensetzung 100 Massen-% beträgt; und wobei

das Klebrigmacherharz (C) mindestens eines ist, das ausgewählt ist aus dem Wasserstoffadditiv des alicyclischen Kohlenwasserstoffharzes und dem Wasserstoffadditiv des aromatischen Kohlenwasserstoffharzes.

2. Deckelmaterial nach Anspruch 1,
wobei das Ethylen/ungesättigter-Ester-Copolymer (A) mindestens ein Polymer umfasst, das ausgewählt ist aus einem Ethylen/Vinylester-Copolymer und einem Ethylen/ungesättigter-Carbonsäureester-Copolymer.

3. Deckelmaterial nach Anspruch 1 oder 2,
wobei das säuremodifizierte Styrol-Copolymer (B) ein Styrol-Copolymer umfasst, das mit mindestens einer Verbindung pfropfmodifiziert ist, die ausgewählt ist aus einer ungesättigten Carbonsäure und einem Derivat der ungesättigten Carbonsäure.

4. Deckelmaterial nach Anspruch 3,
wobei das Styrol-Copolymer, das das säuremodifizierte Styrol-Copolymer (B) bildet, ein oder zwei oder mehre umfasst, die ausgewählt sind aus einem Styrol-Ethylen/Buten-Blockcopolymer (SEB), einem Styrol-Ethylen/Buten-Styrol-Blockcopolymer (SEBS) und einem Styrol-Ethylen/Propylen-Styrol-Blockcopolymer (SEPS).

5. Verpackungsbehälter, umfassend:

einen Behälterhauptkörper mit einer Öffnung; und
einen Deckel, der aus dem Verpackungsmaterial nach einem der Ansprüche 1 bis 4 ausgebildet ist und die Öffnung des Behälterhauptkörpers bedeckt.

**Revendications**

1. Matériau de couvercle comprenant :

une couche de base,
une couche de scellement formée du matériau de scellement formé d'une composition de résine de scellement fournie sur une surface de la couche de base,

la composition de résine de scellement comprenant :

un copolymère d'éthylène/ester insaturé (A) ; et
un copolymère de styrène modifié par un acide (B),
lorsqu'une teneur totale en copolymère d'éthylène/ester insaturé (A) et en copolymère de styrène modifié par un acide (B) dans la composition de résine de scellement est de 100 % en masse,
une teneur en copolymère d'éthylène/ester insaturé (A) étant égale ou supérieure à 60 % en masse et égale ou inférieure à 99 % en masse,
une teneur en copolymère de styrène modifié par un acide (B) étant égale ou supérieure à 1 % en masse et égale ou inférieure à 40 % en masse,
lorsque le total de la composition de résine de scellement est de 100 % en masse, la teneur totale en copolymère d'éthylène/ester insaturé (A) et en copolymère de styrène modifié par un acide (B) étant de 60 % en masse ou plus,
une teneur en résine adhésive (C) dans la composition de résine de scellement étant inférieure à 3 % en masse lorsqu'un total de la composition de résine de scellement est de 100 % en masse ; et
la résine adhésive (C) étant au moins une choisie parmi l'additif hydrogène de la résine hydrocarbonée alicyclique et l'additif hydrogène de la résine hydrocarbonée aromatique.

2. Matériau de couvercle selon la revendication 1,
dans lequel le copolymère d'éthylène/ester insaturé (A) inclut au moins un polymère choisi parmi un copolymère d'éthylène/ester de vinyle et un copolymère d'éthylène/ester d'acide carboxylique insaturé.

3. Matériau de couvercle selon la revendication 1 ou 2,
dans lequel le copolymère de styrène modifié par un acide (B) inclut un copolymère de styrène modifié par greffage avec au moins un composé choisi parmi un acide carboxylique insaturé et un dérivé de l'acide carboxylique insaturé.

4. Matériau de couvercle selon la revendication 3,
dans lequel le copolymère de styrène constituant le copolymère de styrène modifié par un acide (B) inclut un ou deux ou plus choisis parmi un copolymère séquencé de styrène-éthylène/butène (SEB), un copolymère séquencé de styrène- éthylène/butène-styrène (SEBS), et un copolymère séquencé de styrène-éthylène/propylène-styrène (SEPS).

5. Récipient d'emballage comprenant :

un corps principal de récipient ayant une ouverture ; et
un couvercle formé du matériau d'emballage selon les revendications 1 à 4, qui recouvre l'ouverture du corps principal de récipient.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017186460 A

- JP H0496959 A